# NEUE EUROPÄISCHE PATENTSCHRIFT

(11) **EP 0 615 667 B2**
(45) Veröffentlichungstag und Bekanntmachung des Hinweises auf die Entscheidung über den Einspruch: **17.10.2001**
(45) Hinweis auf die Patenterteilung: 19.07.1995
(21) Anmeldenummer: 92923685.9
(22) Anmeldetag: 25.11.1992
(51) Int. Cl.: H02H 3/12

(54) **ANORDNUNG ZUR NETZFREISCHALTUNG VON STEUEREINRICHTUNGEN**
ARRANGEMENT FOR THE OFF-MAINS SWITCHING OF CONTROL DEVICES
SYSTEME POUR LE DECOUPLAGE D'INSTALLATIONS DE COMMANDE PAR RAPPORT AU SECTEUR

(30) Priorität: 02.12.1991 DE 4139647
(43) Veröffentlichungstag der Anmeldung: 21.09.1994
(73) Patentinhaber: Koch, Dietmar, 51645 Gummersbach (DE)
(72) Erfinder: Koch, Dietmar, 51645 Gummersbach (DE)
(74) Vertreter: Stachow, Ernst-Walther, Prof. Dr.
(86) Internationale Anmeldenummer: DE9200993
(87) Internationale Veröffentlichungsnummer: WO9311593

(56) Entgegenhaltungen:
- DE-A- 2 624 316
- DE-B- 4 400 657
- US-A- 3 344 313
- Elektor 11/98, Seite 74, Bild 1 und 2, Spalte 1
- Elektor 09/1986, Netzfreischalter, Seite 54, Bild 1 und Text,Spalte 2 und 3
- VDI-Lexikon, Energietechnik, Helmut Schaefer Seite 936, Notstroman- lage
- Wulf-Dietrich Rose, Elektrostress, Koeselverlag 1987, Seite 172,173
- Elektor 04/1990, Netzfreischalter, Seite 66, Bild 1 und Text, Spalte 3 und 4
- ELRAD 1991, Maerzheft 3, Langer Schalter, Seite 68, Bilder 1, 2, 3 und Text.
- ELEKTOR 11/1973, Bettlese-Timer, Seite 36, Bild 1, Kondensator C1
- Elektor-Buch 273 Schaltungen, Seite 127, 128 1974, Alkoholtester, C1 und Taster

## Beschreibung

Die Erfindung betrifft eine Anordnung zur Netzfreischaltung von Steuereinrichtungen, die über Kabel an ein Wechselstromnetz anschließbar sind und die mit einer netzgebundenen Spannungsquelle zur Erzeugung des Betriebspotentials, bestehend aus einem Transformator und einer Gleichpichterschaltung, versehen sind.

Derartige Steuereinrichtungen werden auf vielen Gebieten der Technik eingesetzt, so auch im unmittelbaren Wohn- oder Schlafbereich von Personen.

Es ist beispielsweise üblich , moderne Sitz- oder Schlafmöbel mit Verstellantrieben zu versehen. Eine derartige Anordnung ist in der WO 89/10715 beschrieben. Diese beinhaltet eine Steuereinrichtung, die mit einer netzgebundenen Spannungsquelle zur Erzeugung des Betriebspotentials versehen ist, die aus einem Transformator und einer Gleichrichterschaltung besteht. Weiterhin weist die Anordnung einen Stellmotor und ein den Stellmotor ansteuerndes Relais auf, dessen Relaisspule über einen Tastschalter am Betriebspotential liegt.

Der Transformator liegt in der Regel an der Netzspannung und es fließt stets, auch dann, wenn keine Verstellbewegungen vorgenommen werden, der Leerlaufstrom des Transformators, was Kosten- und Umweltnachteile bedeutet.

Da sich der Transformator zumeist auch in unmittelbarer Nähe von brennbarem Material und im unmittelbaren Handlungsraum von Menschen befinden, besteht darüberhinaus ein andauerndes Gefahrenpotential infolge von Brandgefahr und der Gefahr eines elektrischen Schlages.

Außerdem wird durch den Transformator ein Magnetfeld generiert, dessen nachteilige Wirkungen auf den menschlichen Organismus, zumindest bei Langzeiteinwirkung, nach neuesten wissenschaftlichen Erkenntnissen nicht mehr ausgeschlossen werden können.

Auch wirken sich häufig nicht vermeidbare Brummgeräusche störend auf die im Raum befindlichen Personen aus. Die DE-B-2105570 beschreibt einen fernsteuerbaren elektrischen Schalter mit einem Relais. Mit diesem fernsteuerbaren elektrischen Schalter, der an ein Wechselstromnetz anschließbar ist, kann eine Trennung einer Last von dem Wechselstromnetz, also eine Netzfreischaltung der Last bewirkt werden. Das Relais, dass räumlich von der Last getrennt in der Netzzuleitung angeordnet ist, ist mit einem Relaisschalter versehen, der sich in einer Schaltstellung in AUS-Stellung befindet und der in der Netzzuleitung liegt. Eine Hilfsspannungsquelle ist über den Tastschalter mit dem Steuereingang des Relais verbunden.

Die Zeitschrift "Elektor" 11/89 (Seite 74) offenbart einen Netzschalter mit Relais, der in einem Schaltergehäuse angeordnet ist.

Es ist nunmehr Aufgabe der Erfindung, eine Anordnung zur Netzfreischaltung von Steuereinrichtungen zu schaffen, mit der mit einfachen technischen Mitteln und ohne zusätzliche manuelle Schaltvorgänge eine Trennung vom Netz während der Zeit erfolgt, in der keine Steuerfunktionen auszuführen sind und die eine Netzzuschaltung ohne zusätzliche manuelle Schaltvorgänge bei einem Erhalt von Steuerbefehlen während deren Dauer realisiert, um somit die Nachteile eines Netzdauerbetriebes zu vermeiden.

Gemäß der Erfindung wird die Aufgabe durch die Merkmale des Anspruchs 1 gelöst.

Damit ist die Netzspannung grundsätzlich von der netzgebundenen Spannungsquelle getrennt, wodurch über diese Spannungsquelle keine Versorgung der Steuereinrichtung mit einer Betriebsspannung erfolgen kann, was jedoch auch nicht erforderlich ist, solange keine oderzumindest keine leistungsaufwendigen Steuerungsvorgänge auszulösen sind.

Erst dann, wenn eine Spannungsversorgung über das Netz erfolgen soll, wird das Relais über die Hilfsspannungsquelle erregt und schaltet damit den oder die Relaisschalter in den EIN-Zustand, wodurch die Spannungsquelle netzseitig angeschlossen wird. Damit erfolgt die Versorgung der Steuereinrichtung mit einer Betriebsspannung über die netzgebundene Spannungsquelle. Danach können auch leistungsaufwendige Steuerungsvorgänge ausgeführt werden. Ein Verbleiben der Hilfsspannungsquelle in der Parallelschaltung ist ohne funktionalen Einfluß.

Nach der Erfindung ist ein für die Schaltungsanordnung funktionsauslösender Schalter mit dem Steuereingang des Relais verbunden. Damit wird einerseits erreicht, daß die erfindungsgemäße Anordnung nur mit einem geringen schaltungs- technischen Mehraufwand eingesetzt werden kann und andererseits die Netzab- oder zuschaltung stets automatisch mit der Schalterbetätigung erfolgt und somit zusätzliche Handgriffe entfallen können.

Da die auszuführenden Steuervorgänge zumeist eine relativ kurze zeitliche Begrenzung haben, ist ein Tastschalter mit dem Steuereingang des Relais verbunden.

Als Hilfsspannungsquelle wird in günstigen Ausgestaltungen der Erfindung eine Batterie oder ein Kondensator, der vorzugsweise einen geringen Leckstrom aufweist, eingesetzt

In einer günstigen Ausgestaltung der Erfindung besteht die Hilfsspannungsquelle aus einem Kondensator, dem eine Batterie parallelgeschaltet ist.

Der besondere Vorteil dieser Ausgestaltung besteht darin, daß die Batterie nur für den erstmaligen Einschaltvorgang benötigt wird, um einmalig das Relais zu schalten. Alle weiteren durch den Schalter ausgeführten Schaltvorgänge beziehen ihre Energie aus dem Kondensator, so daß die Batterie nicht länger beansprucht wird und eine langjährige Lebensdauer aufweist.Handelsübliche Kondensatoren haben so geringe Leckströme, daß die Schaltung mehrere Wochen ihre Energie aus dem Kondensator beziehen kann. Jeder neue Betätigungsvorgang lädt den Kondensator neu auf und bewirkt Schaltungsbereitschaft für weitere Wochen. Nur für den Fall, daß die im Kondensator gespeicherte Energie nicht mehr ausreichen sollte, wird der Strom für den nächst folgenden Einschaltvorgang aus der Batterie entnommen. Bei geeigneter Wahl der Bauelemente wird erreicht, daß die Batterie dann nicht beansprucht wird, wenn der Zeitraum zwischen den Schaltvorgängen nicht länger als zwei bis drei Wochen beträgt Da die Steuerung in der Regel täglich betätigt wird, kann die Netzfreischaltung alleine durch den Kondensator betrieben werden und damit wird auf einfache Art und Weise eine optimale Funktionssicherheit erreicht.

Anstelle der Batterie kann auch ein Überbrückungstaster parallel zu den Kontakten des Relais verwendet werden. Ein Druck auf diesen Taster bewirkt die Ladung des Kondensators mit den zuvor beschriebenen Vorteilen. Wenn man die Relaiskontakte von Hand betätigt erfolgt ebenfalls die Ladung des Kondensators.

Da es dabei nur erforderlich ist, die Leckverluste am Kondensator auszugleichen ist es weiterhin günstig, in der Batterieleitung einen intermittierend schließenden Schalter anzuordnen.

Derartige Varianten haben den Vorteil, daß der Kondensator mit seinem relativ geringen Innenwiderstand als Spannungsquelle genutzt werden kann, wobei zumindest das Relais zuverlässig geschaltet wird und gegebenenfalls auch kurze Stellgliedbewegungen durchgeführtwerden können, ohne zu diesem Zweck Batterien mit einer hohen Kapazität und/oder einem geringen Innenwiderstand einsetzen zu müssen.

In einer besonders günstigen Ausführung der Erfindung ist in derAnschlußleitung der Hilfsspannungsquelle ein Relaisschalter angeordnet, der mit dem Relais verbunden ist und sich im nichterregten Zustand des Relais in EIN-Stellung befindet.

Damit wird gewährleistet, daß die Hilfsspannungsquelle sofort von der Steuereinrichtung getrennt wird, wenn die Spannungsquelle mit dem Netz verbunden ist, da dann das Relais erregt wird und dieser Relaisschalter in die AUS- Stellung geht. Dies ist insbesondere beim Einsatzvon Batterien von Vorteil, da dabei wirkungsvoll vermieden wird, daß ein Strom von der Hilfsspannungsquelle zur übrigen Steuereinrichtung fließt, der bei Betätigung der Stellglieder recht hoch sein könnte. Somit dient diese Ausführung der Erhöhung der Batterielebensdauer.

Es ist weiterhin günstig, das Relais mit zwei Relaisschaltern zum zweipoligen Schalten der netzseitigen Stromzuführung zu versehen.

Die Erfindung soll nachfolgend anhand eines Ausführungsbeispieles näher erläutert werden. Die zugehörige Zeichnung zeigt ein Schaltbild einer erfindungsgemäßen Anordnung in einem Stellantrieb für Schlafmöbel.

Dabei ist ein Stellmotor 1 zur Lageveränderung des Fußbereiches eines als Bettauflage dienenden Lattenrostes und ein Stellmotor 2 zur Lageveränderung des Kopfbereiches vorgesehen.

Die Stellmotoren 1 und 2 sind als Gleichstromotoren ausgeführt.

Der Stellmotor 1 wird über Schaltrelais 1.1 und 1.2 und der Stellmotor 2 über Schaltrelais 2.1 und 2.2 angesteuert, die jeweils eine Polaritätsumkehr der Motorspannung bewirken, wodurch die Stellrichtung verändert werden kann.

Jedes der Schaltrelais 1.1; 1.2; 2.1 und 2.2 liegt einerseits auf Massepotential und andererseits über zugehörige Tastschalter 3 bis 6 an Betriebspotential, welches über eine Spannungsquelle, die aus einem Transformator 7 und einer Gleichrichterbrücke 8 besteht, bereitgestellt wird.

Zur Glättung der pulsierenden Betriebsspannung ist ein Elektrolytkondensator 9 vorgesehen, der zwischen Betriebsspannungspotential und Masse liegt.

Parallel zur Spannungsquelle ist eine Batterie 10 geschaltet, die damit parallel zu dem Elektrolytkondensator 9 liegt und mit diesem zusammen eine Hilfsspannungsquelle darstellt.

In der Netzzuleitung 11 zum Transformator 7 ist ein Relais 12 mit zwei Relaisschaltern eingebracht, so daß der Transformator 7 im nichterregten Zustand des Relais 12 vom Netz zweipolig getrennt ist Auf der Steuerseite besitzt das Relais 12 einerseits eine Verbindung zur Masse und andererseits eine Verbindung zujedem geschaltetem Anschluß der Tastschalter 3 bis 6.

Wie aus der Schaltungsanordnung ersichtlich ist, ist die Spannungsquelle, die aus dem Transformator 7 und der Gleichrichterbrücke 8 besteht, im Ruhezustand vom Netz getrennt.

Bei einer gewünschten Stellbewegung der Stellmotoren 1 oder 2 wird von einer Bedienperson einer der Tastschalter 3 bis 6 betätigt. Damit wird in jedem Falle über die Hilfsspannungsquelle, die aus der Batterie 10 und dem Elektrolytkondensator 9 besteht, das Relais 12 mit der Hilfsspannung beaufschlagt und erregt, was ein Schließen der Relaisschalter zur Folge hat. Somit ist der Transformator 7 an das Netz angeschlossen und die Spannungsquelle versorgt die gesamte Schaltungsanordnung mit Betriebsspannung. Damit können die Stellmotoren 1 und 2 ihre Stellbewegung ausführen.

In Reihe mit der Batterie 10 ist eine Diode 13 geschaltet.

Diese Diode 13 verhindert einen Stromfluß zur Batterie 10, wenn die Betriebsspannungsversorgung über die Spannungsquelle erfolgt, da die Batteriespannung kleiner gewählt wurde als die Betriebsspannung und die Diode 13 in diesem Falle gesperrt ist

Um bei Netzspannungsausfall Verstellbewegungen zu ermöglichen, fließt der Batteriestrom über die Diode 13 in die Schaltungsanordnung, wenn die Tastschalter 3 bis 6 betätigt werden.

Ist die Verstellung abgeschlossen, wird der betätigte Tastschalter 3; 4; 5 oder 6 losgelassen und das Relais 12 fällt in seine Ausgangslage zurück, wodurch wieder eine Netzfreischaltung erreicht ist.

Die räumliche Position der erfindungsgemäßen Anordnung kann in der Steuereinrichtung selbst, in der Netzzuleitung 11 oder am Steckerende, beispielsweise als Steckernetzteil, liegen. Jedoch der Sinn der Anordnung, die Netzspannung möglichst entfernt vom Bett zu halten, läßt eine möglichst große Entfernung von den Stellmotoren 1 und 2 sinnvoll erscheinen.

Die Ansteuerung des Relais 12 erfolgt über Kabel. Hierbei ist es möglich, die zwei notwendigen Adern einzeln, in einem Kabel oder zusammen mit der Netzzuleitung in einem 4- adrigen Kabel zu führen. Hierbei bietet sich die letztgenannte Lösung an.

### Bezugszeichenliste

- 1: Stellmotor für den Fußbereich
- 1.1: Schaltrelais
- 1.2: Schaltrelais
- 2 3 ): Stellmotor für den Kopfbereich
- 4 ) 5 ) 6 ): Tastschalter
- 7: Transformator
- 8: Gleichrichterbrücke
- 9: Elektrolytkondensator
- 10: Batterie
- 11: Netzzuleitung
- 12: Relais
- 13: Diode

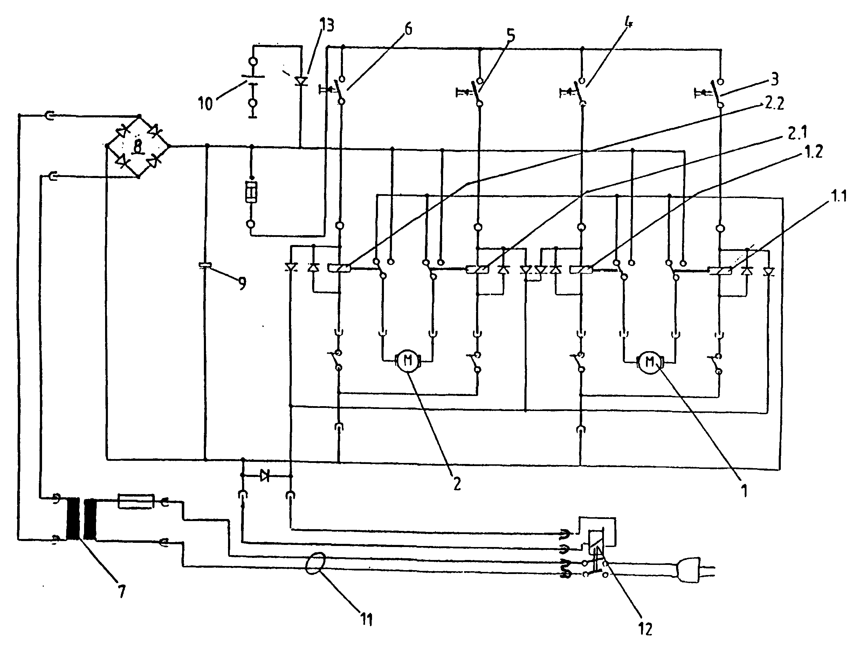

## Patentansprüche

1. Anordnung zur Netzfreischaltung von Steuerungseinrichtungen (1, 1.1, 1.2; 2, 2.1, 2.2) die über Kabel (11) an ein Wechselstromnetz anschließbar sind und die mit einer netzgebundenen Spannungsquelle zur Erzeugung des Betriebspotentials, bestehend aus einem Transformator (7) und einer Gleichrichterschaltung (8), versehen sind, wobei die Anordnung einen Stellmotor (1; 2) und ein den Stellmotor ansteuerndes erstes Relais (1.1, 1.2; 2.1, 2.2), dessen Relaisspule über einen Tastschalter (3-6) am Betriebspotential liegt, aufweist, mit einem Zweiten Relais (12), welches räumlich von der Steuereinrichtung getrennt in der Netzzuleitung oder in einem als Steckernetzteil ausgebildeten Netzstecker angeordnet ist und das mit mindestens einem Relaisschalter versehen ist, der sich im nichterregten Zustand in AUS-Stellung befindet und der in der Netzzuleitung zum Transformator (7) liegt und mit einer parallel zur netzgebundenen Spannungsquelle (7; 8) liegenden Hilfsspannungsquelle (9; 10), die über den Tastschalter (3-6) mit dem Steuereingang des zweiten Relais (12) verbunden ist.

2. Anordnung zur Netzfreischaltung von Steuereinrichtungen nach Anspruch 1, **dadurch gekennzeichnet daß** die parallel zur netzgebundenen Spannungsquelle (7; 8) liegende Hilfsspannungsquelle als Kondensator (9) ausgebildet ist.

3. Anordnung zur Netzfreischaltung von Steuereinrichtungen nach Anspruch 2, **dadurch gekennzeichnet daß** ein zu den Schaltkontakten des zweiten Relais (12) parallelgeschalteter Überbrückungstaster oder ein Mittel zur manueller Betätigung dieser Schaltkontakte vorgesehen ist.

4. Anordnung zur Netzfreischaltung von Steuereinrichtungen nach Anspruch 1, **dadurch gekennzeichnet, daß** die parallel zur netzgebundenen Spannungsquelle (7; 8) liegende Hilfsspannungsquelle als Batterie (10) ausgebildet ist.

5. Anordnung zur Netzfreischaltung von Steuereinrichtungen nach Anspruch 1, **dadurch gekennzeichnet, daß** die parallel zur netzgebundenen Spannungsquelle (7; 8) liegende Hilfsspannungsquelle aus einem Kondensator (9) besteht, dem eine Batterie (10) parallelgeschaltet ist.

6. Anordnung zur Netzfreischaltung von Steuereinrichtungen nach einem der Ansprüche 1 bis 5, **dadurch gekennzeichnet, daß** in der Batterieleitung ein intermittierend schließender Schalter angeordnet ist.

7. Anordnung zur Netzfreischaltung von Steuereinrichtungen nach einem der Ansprüche 1 bis 6, **dadurch gekennzeichnet, daß** in der Anschlußleitung der Hilfspannungsquelle ein Relaisschalter angeordnet ist, der mit dem zweiten Relais (12) verbunden ist und sich im nichterregten Zustand des Relais (12) in EIN-Stellung befindet.

8. Anordnung zur Netzfreischaltung von Steuereinrichtungen nach einem der Ansprüche 1 bis 7, **dadurch gekennzeichnet, daß** das zweite Relais (12) zwei Relaisschalter zum zweipoligen Schalten der netzseitigen Stromzuführung (11) aufweist.

## Claims

1. Arrangement for isolating control devices (1, 1.1, 1.2; 2, 2.1, 2.2) from the mains for control devices which can be connected to an AC mains supply via cables (11) and which are provided with a mains-bound voltage source for generating the internal operating potential, comprising a transformer (7) and a rectifier circuit (8), the arrangement comprising an actuating motor (1; 2) and a first relay (1.1, 1.2; 2.1, 2.2) which controls the actuating motor, the relay coil of the first relay is connected via a push button switch (3-6) to the internal operating potential, with a second relay (12), which is spatially separated from the control device and located in the mains lead or in a mains plug designed as a plug-in power supply unit and is provided with at least one relay-actuated switch which is in the OFF position when not excited and is located in the mains-side supply lead to the transformer (7) and with an auxiliary power source (9; 10) which is wired in parallel with the mains-bound voltage source (7, 8) and is connected to the control input of the second relay (12) via the push button switch (3 to 6).

2. Arrangement for isolating control devices from the mains according to claim 1, **characterized in that** the auxiliary power source connected in parallel to the mains-bound voltage source (7, 8) is designed as a capacitor (9).

3. Arrangement for isolating control devices from the mains according to claim 2, **characterized in that** a bridging switch connected in parallel with the switch contacts of the second relay (12) a means for manual operation of the switch contacts, is provided.

4. Arrangement for isolating control devices from the mains according to claim 1, **characterized in that** the auxiliary power source connected in parallel to the mains-bound voltage source (7, 8) is designed as a battery (10).

5. Arrangement for isolating control devices from the mains according to claim 1, **characterized in that** the auxiliary power source connected in parallel to the mains-bound voltage source (7, 8) consists of a capacitor (9) which has battery (10) connected in parallel.

6. Arrangement for isolating control devices from the mains according to one of the claims 1 to 5, **characterized in that** an intermittently closing switch is located in the battery line.

7. Arrangement for isolating control devices from the mains according to one of the claims 1 to 6, **characterized in that** the relay-actuated switch is located in the connecting lead of the auxiliary power source, this switch being connected to second relay (12) and in the ON position when relay (12) is not excited.

8. Arrangement for isolating control devices from the mains according to one of the claims 1 to 7, **characterized in that** the second relay (12) has two relay-actuated switches for bipolar switching of the mains-side supply lead (11).

## Revendications

1. Dispositif pour déconnecter du secteur des appareils de commande (1, 1.1, 1.2; 2, 2.1, 2.2) qui peuvent être branchés par des câbles (11) sur un secteur à courant alternatif et sont munis, pour la production du potentiel de service, d'une source de tension reliée au secteur se composant d'un transformateur (7) et d'un circuit redresseur (8), le dispositif étant muni d'un moteur de positionnement (1; 2) et d'un premier relais (1, 1.1, 1.2; 2, 2.1, 2.2) qui excite le moteur de positionnement dont la bobine de relais est connectée au potentiel du système par un commutateur à touches (3 - 6), et d'un second relais (12) qui est monté, en un point séparé de l'appareil de commande dans l'espace, dans le cordon d'alimentation secteur ou dans une fiche de raccordement au secteur réalisée sous forme de bloc secteur enfichable, et qui est muni d'au moins un conjoncteur qui se trouve en position OUVERT à l'état non excité et est placé dans l'amenée de courant au transformateur (7), ainsi que d'une source de tension auxiliaire (9; 10) qui est montée en parallèle sur la source de tension (7; 8) reliée au secteur et qui est connectée à l'entrée de commande du second relais (12) par l'intermédiaire d'un commutateur à touches.

2. Dispositif pour déconnecter du secteur des appareils de commande selon la revendication 1, **caractérisé en ce que** la source de tension auxiliaire montée en parallèle sur la source de tension (7; 8) reliée au secteur est réalisée sous forme de condensateur (9).

3. Dispositif pour déconnecter du secteur des appareils de commande selon la revendication 2, **caractérisé en ce qu'**il est prévu une touche de court-circuitage montée en parallèle sur les contacts de commutation de commande du second relais (12) ou un moyen pour l'actionnement manuel de ces contacts de commutation de commande.

4. Dispositif pour déconnecter du secteur des appareils de commande selon la revendication 1, **caractérisé en ce que** la source de tension auxiliaire montée en parallèle sur la source de tension (7; 8) reliée au secteur est réalisée sous forme de batterie (10).

5. Dispositif pour déconnecter du secteur des appareils de commande selon la revendication 1, **caractérisé en ce que** la source de tension auxiliaire montée en parallèle sur la source de tension (7; 8) reliée au secteur se compose d'un condensateur (9) sur lequel une batterie (10) est montée en parallèle.

6. Dispositif pour déconnecter du secteur des appareils de commande selon l'une quelconque des revendications 1 à 5, **caractérisé en ce qu'**un interrupteur qui se ferme par intermittence est disposé dans la ligne de batterie.

7. Dispositif pour déconnecter du secteur des appareils de commande selon l'une quelconque des revendications 1 à 6, **caractérisé en ce qu'**il est disposé, dans la ligne de connexion de la source de tension auxiliaire, un conjoncteur qui est relié au second relais (12) et se trouve en position FERME dans l'état non excité du relais (12).

8. Dispositif pour déconnecter du secteur des appareils de commande selon l'une quelconque des revendications 1 à 7, **caractérisé en ce que** le second relais (12) comporte deux conjoncteurs pour la commutation bipolaire de l'amenée de courant (11) du côté secteur.
